# EUROPEAN PATENT APPLICATION

(11) **EP 4 738 310 A1**
(43) Date of publication of application: **06.05.2026**
(21) Application number: 23943562.1
(22) Date of filing: 27.06.2023
(51) Int. Cl.: G08G 1/127

(54) **TRAVEL PLANNING DEVICE AND TRAVEL PLANNING SYSTEM**

(71) Applicant: MITSUBISHI ELECTRIC CORPORATION, Chiyoda-ku Tokyo 100-8310 (JP)
(72) Inventor: TOMINAGA Kenta, Tokyo 100-8310 (JP); KAWAI Katsuya, Tokyo 100-8310 (JP); KITANO Hiroaki, Tokyo 100-8310 (JP); HARADA Shogo, Tokyo 100-8310 (JP)
(74) Representative: Hoffmann Eitle
(86) International application number: PCT/JP2023/023710
(87) International publication number: WO 2025/004160

(57) **Abstract**

The present disclosure relates to a travel planning apparatus. A travel planning apparatus according to the present disclosure is a travel planning apparatus that changes a travel plan of a vehicle, the travel planning apparatus including: a travel plan changing unit that changes the travel plan based on at least one of people flow information that is information on people flow, popular spot information that is information on popular spots, real estate information that is information on real estate, facility-related information that is information on facilities, road information that is information on roads, or roadside apparatus installation information that is information on installed roadside apparatus, in an area where the vehicle travels; and a travel plan output unit that outputs a changed travel plan, in which the people flow information includes information on people flow according to the number of people using a commercial facility or a tourist spot.

## Description

### TECHNICAL FIELD

The present disclosure relates to a travel planning apparatus, and more particularly to a travel planning apparatus capable of changing a travel plan.

### BACKGROUND ART

In recent years, various technologies for automatically transporting a person, such as an automatic driving bus, have been proposed. As one of the methods, a method for automatically determining an operation plan of a self-driving vehicle has been developed. For example, Patent Document 1 discloses a method of changing a departure time of a self-driving vehicle based on an arrival time of a train.

### PRIOR ART DOCUMENT

### PATENT DOCUMENT

Patent Document 1: Japanese Patent Application Laid-Open No. 2003-331379

### SUMMARY

### PROBLEM TO BE SOLVED BY THE INVENTION

In the method disclosed in Patent Document 1, the travel plan can be changed according to the operation status of the train, but the travel plan cannot be changed according to the situation of the area where the self-driving vehicle is operated.

The present disclosure has been made to solve the above problems, and an object of the present disclosure is to provide a travel planning apparatus capable of changing a travel plan according to a situation of an area.

### MEANS TO SOLVE THE PROBLEM

A travel planning apparatus according to the present disclosure is a travel planning apparatus that changes a travel plan of a vehicle, the travel planning apparatus including: a travel plan changing unit that changes the travel plan based on at least one of people flow information that is information on people flow, popular spot information that is information on popular spots, real estate information that is information on real estate, facility-related information that is information on facilities, road information that is information on roads, or roadside apparatus installation information that is information on installed roadside apparatus, in an area where the vehicle travels; and a travel plan output unit that outputs a changed travel plan, in which the people flow information includes information on people flow according to the number of people using a commercial facility or a tourist spot.

### EFFECTS OF THE INVENTION

According to the travel planning apparatus of the present disclosure, since the travel plan is changed based on at least one of the people flow information, the popular spot information, the real estate information, the facility-related information, the road information, or the roadside apparatus installation information, the travel plan can be changed according to the situation of the area.

### BRIEF DESCRIPTION OF DRAWINGS

[Fig. 1] is a functional block diagram illustrating a configuration of a travel planning apparatus of a first embodiment of the present disclosure.
[Fig. 2] is a diagram schematically illustrating an example of a travel plan.
[Fig. 3] is a diagram schematically illustrating an example of people flow information.
[Fig. 4] is a diagram illustrating a travel plan and people flow information before a change together.
[Fig. 5] is a diagram illustrating a travel plan and people flow information after the change together.
[Fig. 6] is a diagram illustrating a travel plan and people flow information before a change together.
[Fig. 7] is a diagram illustrating a travel plan and people flow information after the change together.
[Fig. 8] is a diagram illustrating a travel plan and roadside apparatus installation information before a change together.
[Fig. 9] is a diagram illustrating a travel plan and roadside apparatus installation information after the change together.
[Fig. 10] is a functional block diagram illustrating a configuration of a travel planning system according to a second embodiment of the present disclosure.
[Fig. 11] is a functional block diagram illustrating a configuration of a travel planning system according to a modification of the second embodiment of the present disclosure.
[Fig. 12] is a diagram illustrating an example of a roadside apparatus installation plan by a roadside apparatus installation planning apparatus in the travel planning system according to the modification of the second embodiment of the present disclosure.
[Fig. 13] is a diagram illustrating an example of a roadside apparatus installation plan by a roadside apparatus installation planning apparatus in the travel planning system according to the modification of the second embodiment of the present disclosure.

### DESCRIPTION OF EMBODIMENTS

### <First Embodiment>

### <Apparatus Configuration>

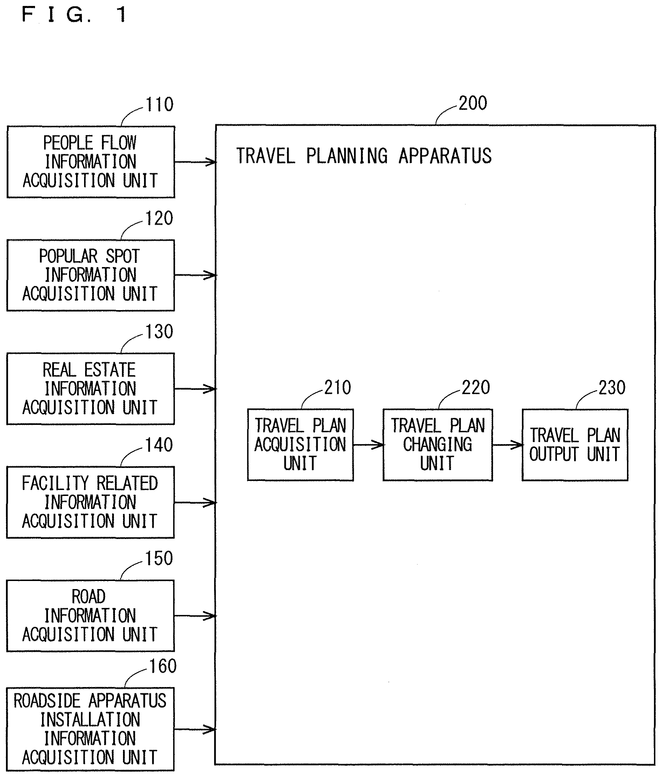

Fig. 1 is a functional block diagram illustrating a configuration of a travel planning apparatus 200 of a first embodiment of the present disclosure. The travel planning apparatus 200 is, for example, an apparatus that changes a travel plan used in an automatic driving bus according to a situation of an area where the bus is operated.

As illustrated in Fig. 1, the travel planning apparatus 200 is connected to a people flow information acquisition unit 110, a popular spot information acquisition unit 120, a real estate information acquisition unit 130, a facility-related information acquisition unit 140, a road information acquisition unit 150, and a roadside apparatus installation information acquisition unit 160 which are input apparatuses provided outside.

The people flow information acquisition unit 110 is an input apparatus that acquires people flow information that is information on people flow according to the number of people using a commercial facility or a tourist spot. The people flow information includes, for example, the number of users calculated from an image of a monitoring camera installed in a commercial facility or a tourist spot, or the number of users calculated from position information of a mobile phone.

As a method of calculating the number of users from the image of the monitoring camera, for example, the number of users can be calculated by recognizing a person entering through the entrance from the image of the monitoring camera installed at the entrance of the commercial facility or the tourist spot by image processing. As a method of calculating the number of users from the position information of the mobile phone, for example, the number of users can be calculated by cooperating with a mobile phone company, acquiring the position information of the mobile phone from the mobile phone company, and associating the position information with the map information.

The popular spot information acquisition unit 120 is an input apparatus that acquires popular spot information that is information regarding a popular spot. The popular spot information includes, for example, the number of times a word related to a spot is searched on the Internet, the number of times a word related to a spot is posted on the Internet, and word-of-mouth information of a spot.

Since the travel plan can be changed based on the popular spot information, for example, the travel plan can be changed so as to pass through a spot with many reviews.

Here, the word of mouth is information transmitted by a consumer using a product or a service using a site, a bulletin board, or the like on a network.

For example, the number of appearances of a word in a social networking service (SNS) is acquired as popular spot information by natural language processing of recognizing the word in the SNS using a known search algorithm for sentences in natural language.

The word-of-mouth information of the spot can be obtained from a uniform resource locator (URL) regarding the spot. For example, the word-of-mouth information can be obtained from a score of gourmet site evaluation. Furthermore, it is possible to acquire word-of-mouth information by acquiring a message corresponding to "customer's voice" from a homepage (HP) of a travel agency or the like and detecting a word from description contents of the word-of-mouth by the natural language processing described above.

The real estate information acquisition unit 130 is an input apparatus that acquires real estate information that is information regarding real estate. The real estate information includes, for example, real estate selling information, real estate registration information, tenant information, and tenant recruitment status. The real estate information can be acquired from a real estate company in cooperation with the real estate company in the area where the automatic driving bus is operated. The real estate company generally forms a network with other real estate companies in the area to share the real estate information, and the real estate information acquisition unit 130 can be connected to the network to acquire the real estate information.

Since the travel plan can be changed based on the real estate information, for example, when a medical facility is newly provided as a tenant, the travel plan can be changed so as to pass through the medical facility.

The facility-related information acquisition unit 140 is an input apparatus that acquires the facility-related information that is the information regarding the facility. The facility-related information includes, for example, construction plan information of a commercial facility, demolition plan information of a commercial facility, maintenance information of a commercial facility, and reconstruction information of a commercial facility, and the facility-related information can be acquired from the latest information of the HP by accessing the HP of the commercial facility.

Since the travel plan can be changed based on the facility-related information, for example, the travel plan can be changed so as not to pass through the facility when the facility is demolished.

The road information acquisition unit 150 is an input apparatus that acquires road information that is information on a road. The road information includes, for example, past congestion information, a travel difficulty level, and a stop installation difficulty level.

Since the travel plan can be changed based on the road information, the travel plan can be changed so that the operation of the target vehicle becomes smooth, for example, a place where congestion is likely to occur is excluded from the travel route.

The past congestion information is information regarding past congestion, and includes, for example, an occurrence probability of congestion, an occurrence time and a time zone of congestion, an occurrence position of congestion, a congestion length, and the like, and can be acquired from the Japan Road Traffic Information Center (JARTIC), NAVITIME (registered trademark), and the like.

The travel difficulty level is information related to the ease of traveling of the vehicle, and includes, for example, the narrowness of the road, the number of blind spots, the number of necessary lane changes, the time taken for a lane change, the number of crosswalks, the number of crossing pedestrians, the number of one-way roads, and the like. The travel difficulty level can be determined by, for example, acquiring map information from the HP of the Geospatial Information Authority of Japan and recognizing a road, and the difficulty level can be determined by recognizing a road width, a sidewalk, a sharp curve, and the like from the map information.

The stop installation difficulty level is information regarding ease of installation of a stop, and includes, for example, the size of a road, the presence or absence of a sidewalk, and the like. The stop installation difficulty level can also be determined by, for example, acquiring map information from the HP of the Geospatial Information Authority of Japan and recognizing a road.

When the road information includes information on a three-dimensional shape of a static target on a road, the static target means a target that does not move, such as a building and a street tree. Note that the three-dimensional shape can be expressed by a three-dimensional point group or can be expressed by a voxel or the like.

The roadside apparatus installation information acquisition unit 160 is an input apparatus that acquires roadside apparatus installation information that is information regarding the installed roadside apparatus. The roadside apparatus installation information includes, for example, a type, a mounting position, and a mounting posture of a roadside apparatus, and can be acquired from information of a roadside apparatus installation plan or a roadside apparatus installation record when the roadside apparatus is installed, and the roadside apparatus installation information can be acquired by enabling the roadside apparatus installation information acquisition unit 160 to be connected to a database storing these pieces of information.

Since the travel plan can be changed based on the roadside apparatus installation information, for example, the travel plan can be changed so as not to pass a route where a roadside apparatus that is not effective for safe traveling of the target vehicle is installed.

As illustrated in Fig. 1, the travel planning apparatus 200 includes a travel plan acquisition unit 210, a travel plan changing unit 220, and a travel plan output unit 230, and can acquire, change, and output a travel plan. The travel planning apparatus 200 is mounted on, for example, an operation management server of a business operator that operates and manages an automatic driving bus.

### <Travel Plan Acquisition Unit>

The travel plan acquisition unit 210 includes an input interface for acquiring the current travel plan of the target vehicle. The travel plan includes any one of a travel route, a stay position, a departure time, an arrival time, and the number of services, and can be acquired from an operation plan created in advance by the business operator when the target vehicle is an automatic driving bus.

Note that, when the target vehicle is a manually driven taxi or an individual car, the travel plan can be acquired from navigation information of the target vehicle or the like. In the case of manual driving, a travel route set in advance by a driver with a navigation apparatus before traveling can be acquired as a travel plan.

Since the travel route, the stay position, the departure time, the arrival time, and the number of services can be changed, for example, when a commercial facility is formed on a road that has not been passed when the travel route is set, the travel plan can be changed so as to include the commercial facility in the travel route.

### <Travel Plan Changing Unit>

The travel plan changing unit 220 changes the travel plan based on at least one of people flow information, popular spot information, real estate information, facility-related information, road information, or roadside apparatus installation information. That is, the people flow information and the popular spot information are information that changes from moment to moment, and for example, the travel plan is changed at a predetermined frequency such as once in a month, or the travel plan is changed when a difference from the previous time is observed at a predetermined frequency and the difference is large. On the other hand, since the real estate information and the facility-related information change less frequently, the travel plan is changed at the timing when the information changes.

When the travel plan is changed based on the people flow information, for example, the travel plan is changed so as to pass through a position where a large people flow is present.

In a case where the travel plan is changed based on the popular spot information, for example, a facility having a high score of word-of-mouth evaluation is determined to be a popular spot, and the travel plan is changed so as to pass through the facility.

In a case where the travel plan is changed based on the real estate information, for example, when there is a building with a medical tenant from the tenant information, it is determined that the demand for the target vehicle is high, and the travel plan is changed so as to pass through the building.

When the travel plan is changed based on the facility-related information, for example, when there is new construction or reconstruction of the facility, it is determined that the demand for the target vehicle increases, and the travel plan is changed so as to pass through the facility.

When the travel plan is changed based on the road information, for example, the travel plan is changed so as not to pass through a place where the occurrence frequency of congestion is high.

When the travel plan is changed based on the roadside apparatus installation information, for example, the travel plan is changed so as to preferentially select a road having many roadside sensors and few blind spots.

In changing the travel plan, only any one element of the travel plan can be changed, or a plurality of elements can be changed. For example, when the target vehicle is an automatic driving bus, when a position where a large people flow is present is close to an existing travel route, the travel route is not changed, and only a stay position is added. In addition, when the position where a large people flow is present is far from the existing travel route, the travel route is changed and the stay position is added. In addition, when the amount of people flow changes with time, the number of buses is increased only in a time zone when a large people flow is present. In addition, the arrival-departure time of the travel plan can be changed in accordance with the opening time and closing time of the facility and the arrival-departure time of other transportation facilities.

The travel plan can be changed based on a combination of a plurality of pieces of information. For example, when the travel plan is changed based on the people flow information and the road information, the travel plan can be changed with the people flow information prioritized. That is, the travel plan is changed so as to pass through a position where a large people flow is present although the occurrence frequency of traffic congestion is high.

In a case where the target vehicle is an automatic driving bus, the travel route can be planned by an optimization method so that the travel distance is shortened through the stay position, for example. At that time, for example, the evaluation function can be set so as to avoid a road with a high traffic congestion frequency or a road with many blind spots. In addition to the optimization, the travel route can be planned by a known method.

As a method of optimization, a Dijkstra method and an A-star (A*) algorithm method, which are search algorithms used in route search of car navigation, can be used. In addition, a method of solving a traveling salesman problem (TSP) can be used.

Methods other than optimization include rule based methods. For example, a method is conceivable in which a change rule when a basic travel route or each point is added or deleted, that is, where the basic travel route is branched and rejoined is defined in advance, and the travel route is determined by condition determination. More specifically, a method is conceivable in which a route to be used for movement from A town to B town is set in advance, and when movement from A town to B town is required, the route is applied.

The travel plan changing unit 220 can be configured using a computer, and is implemented by the computer executing a program. That is, the travel plan changing unit 220 is implemented by, for example, a processing circuit. A processor such as a central processing unit (CPU) or a digital signal processor (DSP) is applied to the processing circuit, and a function of each unit is implemented by executing a program stored in a storage apparatus.

Note that dedicated hardware may be applied to the processing circuit. When the processing circuit is dedicated hardware, the processing circuit corresponds to, for example, a single circuit, a composite circuit, a programmed processor, a parallel programmed processor, an application specific integrated circuit (ASIC), a field-programmable gate array (FPGA), or a combination thereof.

The functions of the travel plan changing unit 220 may be implemented by individual processing circuits, or the functions may be collectively implemented by one processing circuit.

### <Travel Plan Output Unit>

The travel plan output unit 230 includes an output interface that outputs the travel plan changed by the travel plan changing unit 220 to the outside. The output destination is an automatic driving operation manager or an operation management apparatus. The output to the operation manager is notified by a pop-up display on a display used by the operation manager for operation management, an e-mail, or the like. When the travel plan is output to the operation manager, maintenance of the travel plan can be semi-automated. In addition, when output to the operation management apparatus, maintenance of the travel plan can be automated.

### <Change of Travel Plan by Travel Planning Apparatus>

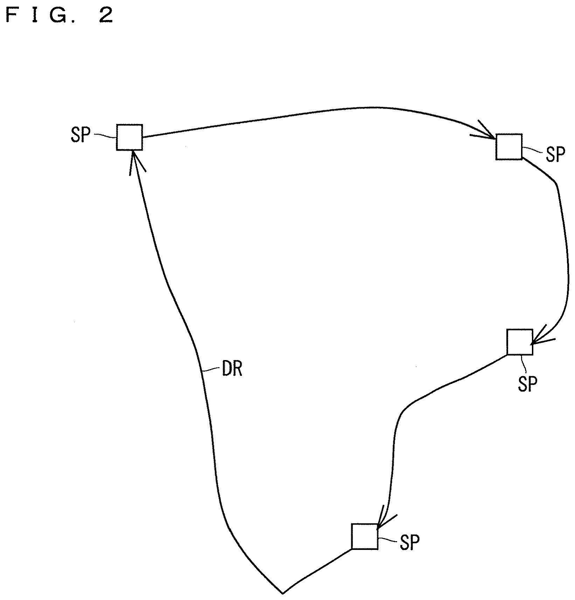

Hereinafter, the change of the travel plan by the travel planning apparatus will be described with reference to Figs. 2 to 9. Fig. 2 is a diagram schematically illustrating an example of a travel plan.

As illustrated in Fig. 2, the travel plan includes information on a travel route DR indicated by an arrow in the figure and stay positions SP indicated by a square in the figure. When the moving object whose travel plan is to be changed is an automatic driving bus, information such as a departure time, an arrival time, and the number of services can also be included. The travel plan illustrated in Fig. 2 is a plan for circling around the four stay positions SP clockwise.

### <Change of Travel Plan Based on People Flow Information>

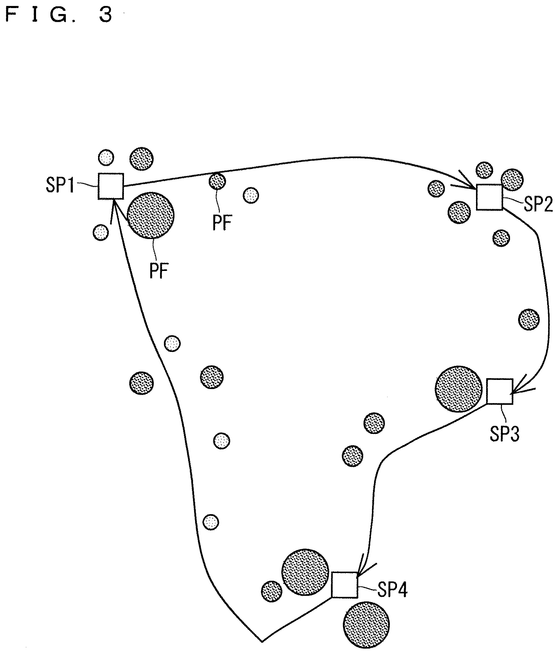

Fig. 3 is a diagram schematically illustrating an example of people flow information. The people flow information includes information on positions of commercial facilities and tourist spots and the number of users. In Fig. 3, the people flow information PF is indicated by circles, the positions of the circles indicate the positions of commercial facilities and tourist spots, the sizes of the circles indicate the number of users, and the larger the circles, the larger the number of users. In addition, it is also possible to indicate whether it is a commercial facility or a tourist spot by shading of hatching attached to a circle.

The number of users is the number of users per unit time, and the unit time can be set to one day, one week, one month, or the like.

Fig. 3 illustrates an example in which the concentration of the people flow occurs at a stay position SP1, a stay position SP3, and a stay position SP4.

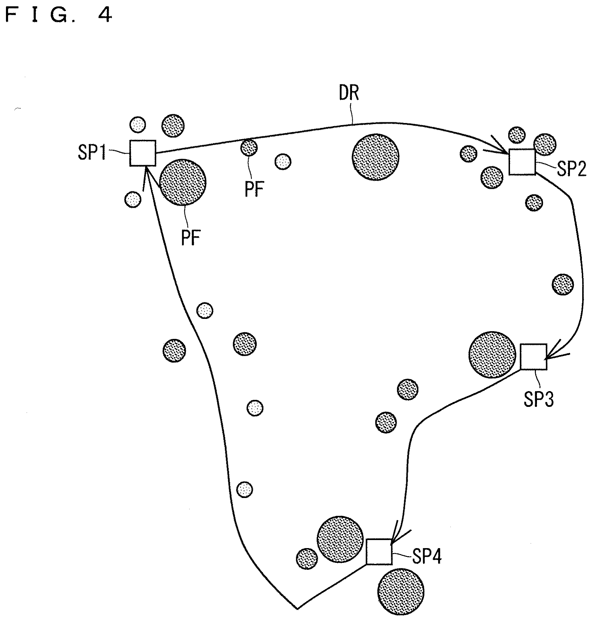

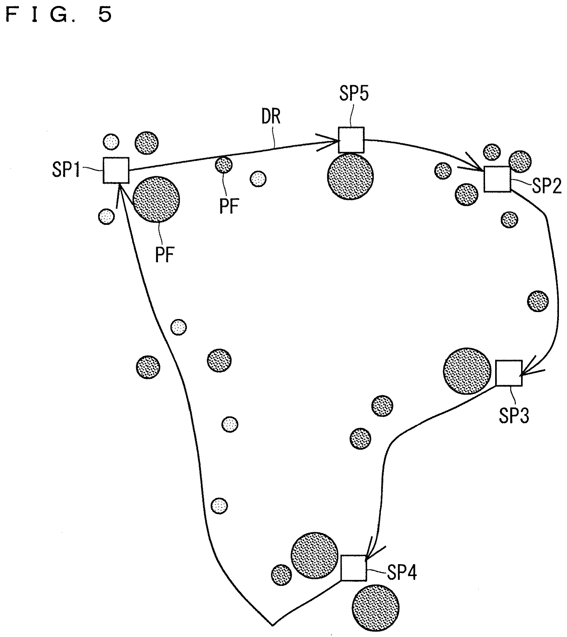

Figs. 4 and 5 are diagrams schematically illustrating an example of changing the travel plan based on the people flow information. Fig. 4 is a diagram illustrating both the travel plan and the people flow information before the change, and Fig. 5 is a diagram illustrating both the travel plan and the people flow information after the change.

In Fig. 4, there is a place where a people flow is generated between the stay position SP1 and a stay position SP2, but there is no stay position in the vicinity of the portion, so that the bus has a travel plan to pass through. When the people flow information acquired at the time of changing the travel plan is the information as shown in Fig. 4, the travel plan changing unit 220 changes the travel plan so as to add a stay position to correspond to the people flow information. That is, as illustrated in Fig. 5, the stay position SP5 is added near the position where the people flow is generated between the stay position SP1 and the stay position SP2. This increases the convenience of the automatic driving bus.

As the determination on the addition of the stay position in the travel plan changing unit 220, for example, when the number of users is a predetermined number or more and there is no stay position within a predetermined range from the position of the people flow, it is determined to add the stay position. As shown in Fig. 5, when the position of the people flow is within a predetermined range from the existing travel route DR, the stay position SP5 is added to the existing travel route DR without changing the travel route. In addition, the number of users serving as a determination criterion is not the number of users at a single commercial facility and tourist spot, but may be the total number of users when a plurality of commercial facilities and tourist spots are present nearby.

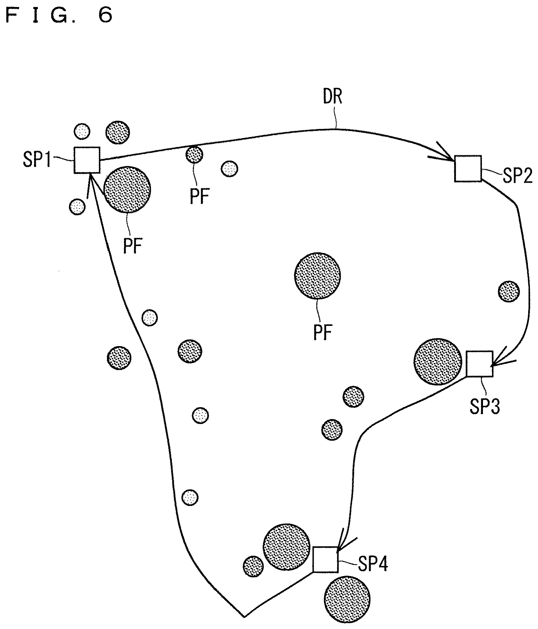

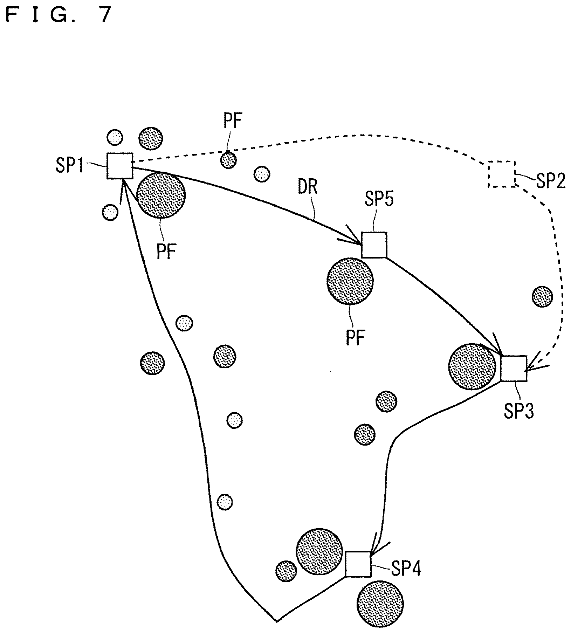

Figs. 6 and 7 are diagrams schematically illustrating an example of changing the travel plan based on the people flow information. Fig. 6 is a diagram illustrating both the travel plan and the people flow information before the change, and Fig. 7 is a diagram illustrating both the travel plan and the people flow information after the change.

In Fig. 6, there is no people flow in the vicinity of the stay position SP2, and there is a place where the people flow is generated at an intermediate point between the stay position SP1 and the stay position SP3. However, the existing travel route DR is a travel plan that passes through the stay position SP2 without passing through the place. When the people flow information acquired at the time of changing the travel plan is information as shown in Fig. 6, the travel plan changing unit 220 changes the travel plan so as to delete the stay position, add the stay position, and change the travel route in order to correspond to the people flow information. That is, as illustrated in Fig. 7, the stay position SP5 is added between the stay position SP1 and the stay position SP3, and the stay position SP2 is deleted. Further, the travel route reaching the stay position SP3 from the stay position SP1 via the stay position SP2 is deleted, and the travel route DR is changed so as to reach the stay position SP3 from the stay position SP1 via the stay position SP5. This increases the convenience of the automatic driving bus.

As the determination on deletion of the stay position in the travel plan changing unit 220, for example, when the total value of the number of users within a predetermined range from the stay position is equal to or less than a predetermined number, it is determined to delete the stay position.

As the determination on the addition of the stay position in the travel plan changing unit 220, for example, when the number of users is a predetermined number or more and there is no stay position within a predetermined range from the position of the people flow, it is determined to add the stay position.

As shown in Fig. 6, when the position of the people flow is out of the predetermined range from the existing travel route DR, the travel route DR is changed so as to include the added stay position SP5. The position to which the stay position is added is determined based on the stop installation difficulty level or the like. In the change of the travel route, the travel route is changed so as to be shortened, or changed based on the travel difficulty level.

### <Change of Travel Plan Based on Roadside Apparatus Installation Information>

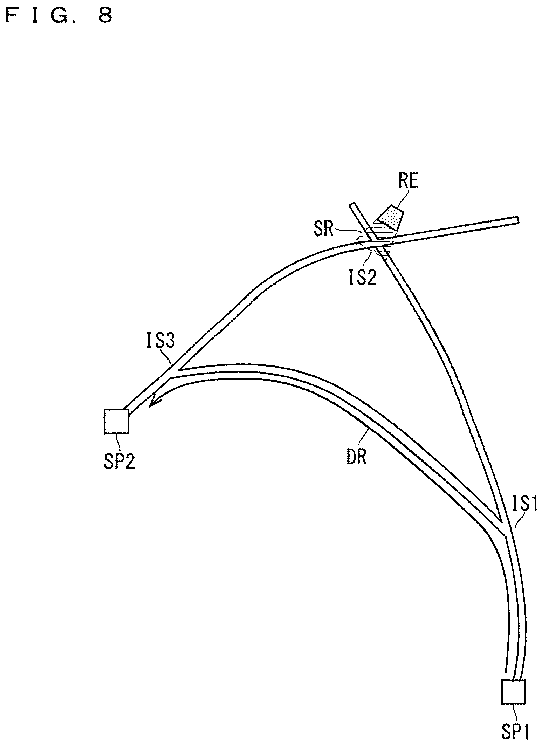

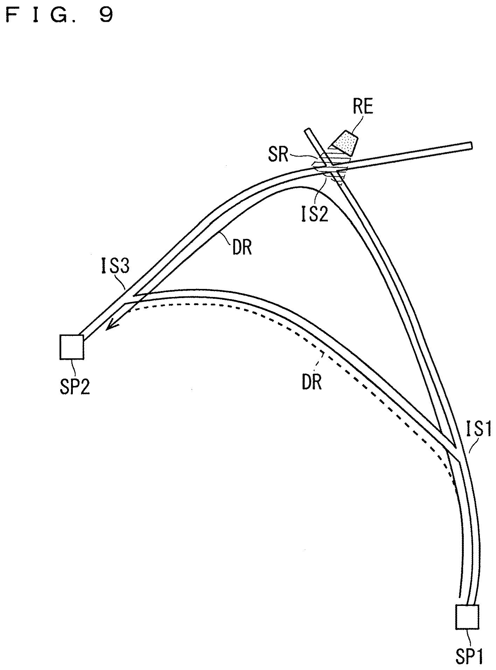

Figs. 8 and 9 are diagrams schematically illustrating an example of changing the travel plan based on the roadside apparatus installation information. Fig. 8 is a diagram illustrating both the travel plan and the roadside apparatus installation information before the change, and Fig. 9 is a diagram illustrating both the travel plan and the roadside apparatus installation information after the change.

In Fig. 8, the travel route DR is a route that reaches the stay position SP2 from the stay position SP1 via an intersection IS1 and an intersection IS3, and is a route that does not pass through an intersection IS2 to which the roadside apparatus RE is newly added. When the roadside apparatus installation information acquired when the travel plan is changed is information in which a roadside apparatus RE is newly added to the intersection IS2 as illustrated in Fig. 8, the travel plan changing unit 220 estimates a detection range SR of the roadside apparatus RE based on the type, mounting position, and mounting posture of the added roadside apparatus RE and the information on the three-dimensional shape of the static target on the road included in the road information. Then, the travel plan changing unit 220 compares the risk of turning left at the intersection IS1 and the intersection IS3 with the risk of going straight through the intersection IS1, turning left at the intersection IS2, and going straight through the intersection IS3, and changes the travel route so as to pass through the intersection IS2 when determining that the latter risk is smaller. That is, as illustrated in Fig. 9, the travel route DR in Fig. 8 is deleted, and the travel route is changed to a travel route DR in which the vehicle travels straight from the SP1 through the intersection IS1, turns left at the intersection IS2, and travels straight through the intersection IS3 to reach the stay position SP2. As a result, as a result, although the travel distance becomes long, the number of left turns at the intersection is reduced, and the safety is improved.

As an example of the risk determination by the travel plan changing unit 220, there is a method of using the following determination indexes (a) to (d).
(a) Width of road recognized from map information
(b) How much detection range of roadside apparatus covers intersection
(c) Angle of intersection
(d) Presence/absence and type of traffic light

Each of the indexes (a) to (d) is quantified, weighted, and added to obtain a risk. Since the risk increases as the index (b) decreases, the inverse is multiplied by a weighting factor. The index (d) is a discrete value such as high risk when there is no traffic light, and low risk when there is a right/left turn signal.

Note that, in the determination of the route change, it is also possible to determine by weighting which of the risk and the travel distance is prioritized in consideration of the travel distance.

### <Second Embodiment>

### <Apparatus Configuration>

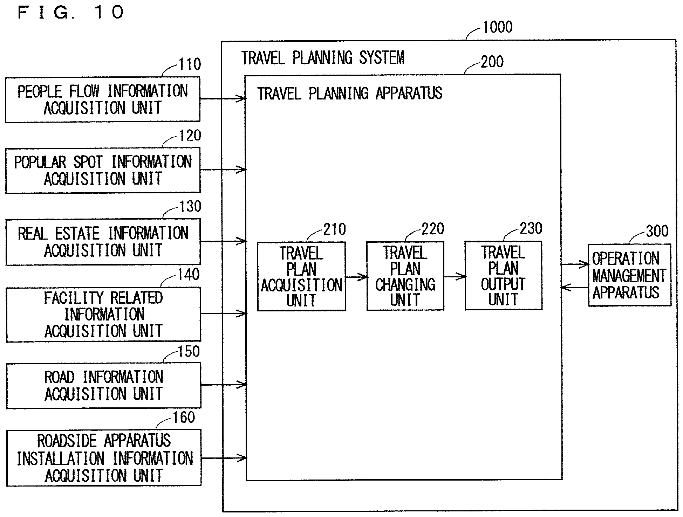

Fig. 10 is a functional block diagram illustrating a configuration of a travel planning system 1000 according to a second embodiment of the present disclosure. As illustrated in Fig. 10, the travel planning system 1000 includes a travel planning apparatus 200 and an operation management apparatus 300 that exchanges information with the travel planning apparatus 200.

The operation management apparatus 300 is an apparatus that manages the operation of the vehicle, and is mounted on, for example, an operation management server, but can be mounted on a server different from the travel planning apparatus 200.

When the moving object whose travel plan is to be changed in the travel planning apparatus 200 is a bus, the operation management apparatus 300 gives an operation instruction to the automatic driving bus, and grasps and manages an operation status.

The operation management apparatus 300 can decide whether to adopt the changed travel plan in the travel planning apparatus 200, and outputs a result of adoption or rejection to the travel planning apparatus 200 and a reason for rejection in the case of rejection to the travel planning apparatus 200. As a reason for rejection, when the evaluation function is set by the optimization method and the travel plan is changed, "rejected from the viewpoint of risk" and the like can be cited. The reason for rejection may be cost or profitability in addition to the risk.

When the travel plan is rejected by the operation management apparatus 300, the travel plan changing unit 220 of the travel planning apparatus 200 can change the plan policy so that the travel plan is unlikely to be rejected. For example, when the travel plan is changed by an optimization method based on the people flow information and the road information, the travel plan is changed so as to pass through a position where the frequency of occurrence of congestion is high but a large people flow is present. However, when the travel plan is not adopted due to the frequency of occurrence of congestion, weights or constraints are adjusted so that the travel plan becomes a travel plan with a low frequency of occurrence of congestion, and the travel plan is made again. As a result, the adoption probability of the travel plan is improved.

Even when the operation manager decides adoption or rejection instead of the operation management apparatus 300, the plan policy can be changed based on the reason for rejection of the operation manager.

In a case where a commercial facility is formed on a road that has not been passed when the travel route is set, it can be proposed to the operation manager to include the commercial facility in the travel route, or conversely, when the commercial facility is close down and there is no need to pass through the commercial facility, it can be proposed to the operation manager to remove the commercial facility from the travel route, and the travel plan can be changed according to the situation of the area.

Since the operation management apparatus outputs the reason why the changed travel plan is rejected by the travel planning apparatus to the travel planning apparatus, it is possible to increase the probability of adoption of the travel plan by changing the plan policy so as not to be rejected.

The travel planning system 1000 is provided as a system of a bus company when the vehicle to be managed by the operation management apparatus 300 is a bus, is provided as a system of a taxi company when the vehicle to be managed is a taxi, and is provided as a system of a logistics company when the vehicle to be managed is a logistics vehicle, but the user of the system is not limited to the above.

In addition, the vehicle to be managed by the operation management apparatus 300 is not limited to an automatic driving vehicle, and may be a manually driven vehicle. In the case of manual driving, after the travel planning apparatus 200 changes the travel route set in advance by the driver with the navigation apparatus before traveling, if the operation management apparatus 300 determines that the changed route may be adopted, the travel planning apparatus 200 presents the changed route to the driver via the display of the navigation apparatus.

In addition, it is also possible to set a travel plan for going around main sightseeing spots in a car sharing vehicle at a tourist spot and present the travel plan to the driver.

The operation management apparatus 300 can be configured using a computer, and is implemented by the computer executing a program. That is, the operation management apparatus 300 is implemented by, for example, a processing circuit. A processor such as a CPU or a DSP is applied to the processing circuit, and a function of each unit is implemented by executing a program stored in a storage apparatus.

Note that dedicated hardware may be applied to the processing circuit. In a case where the processing circuit is dedicated hardware, the processing circuit corresponds to, for example, a single circuit, a composite circuit, a programmed processor, a parallel programmed processor, ASIC, FPGA, or a combination thereof.

The functions of the operation management apparatus 300 may be implemented by individual processing circuits, or the functions may be collectively implemented by one processing circuit.

### <Modification>

### <Apparatus Configuration>

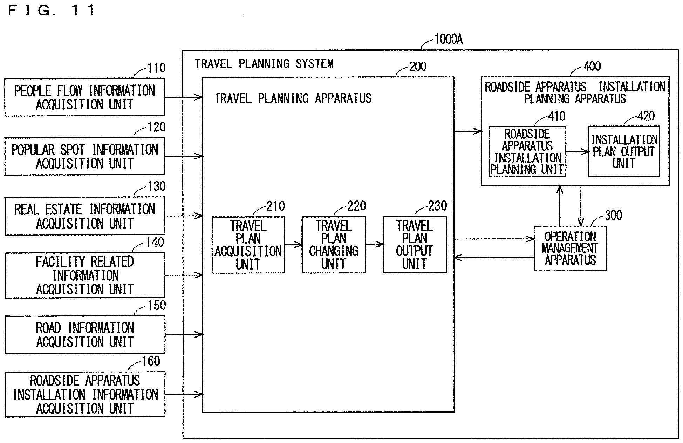

Fig. 11 is a functional block diagram illustrating a configuration of a travel planning system 1000A according to a modification of a second embodiment of the present disclosure. As illustrated in Fig. 11, the travel planning system 1000A is a system including a travel planning apparatus 200, an operation management apparatus 300, and a roadside apparatus installation planning apparatus 400.

The roadside apparatus installation planning apparatus 400 receives information from the travel planning apparatus 200 and exchanges information with the operation management apparatus 300.

As illustrated in Fig. 11, the roadside apparatus installation planning apparatus includes a roadside apparatus installation planning unit 410 and an installation plan output unit 420. The roadside apparatus installation planning unit 410 creates a roadside apparatus installation plan, and outputs the created installation plan from the installation plan output unit 420. For example, the roadside apparatus installation planning apparatus 400 is mounted on an operation management server, but can be mounted on a server different from the travel planning apparatus 200 and the operation management apparatus 300.

### <Roadside Apparatus Installation Planning Unit>

The roadside apparatus installation planning unit 410 acquires road information, roadside apparatus installation information, and a changed travel plan output from the travel plan output unit 230 from the travel planning apparatus 200, and creates a roadside apparatus installation plan based on these.

As a method of creating an installation plan, for example, a detection range of an existing roadside apparatus is estimated from a three-dimensional shape of a static target, a type of the existing roadside apparatus, a mounting position, and a mounting posture, and when it is determined that there is a blind spot on a travel route, a plan is made to add the roadside apparatus so as to eliminate the blind spot.

In this case, it is possible to plan to be robust to the environment in consideration of environment-friendliness for each sensor. For example, when a light detection and ranging (LiDAR) is already installed as a roadside apparatus, it is planned to additionally install a millimeter-wave radar that is resistant to rain.

The roadside apparatus installation planning unit 410 can plan to reduce the price in consideration of the price of the sensor.

When the travel plan is changed, there is a possibility that a new roadside apparatus is required. Therefore, by proposing a roadside apparatus installation plan according to the change of the travel plan to the operation manager, the operation manager can easily change the travel plan.

The roadside apparatus installation plan can be simulated with a digital twin representing, in virtual space, what is present in physical space. Further, even if the travel plan is not changed, the roadside apparatus installation plan can be made.

### <Installation Plan Output Unit>

The installation plan output unit 420 outputs the roadside apparatus installation plan planned by the roadside apparatus installation planning unit 410. The output destination is the operation management apparatus 300, but the roadside apparatus installation plan can also be output to an automatic driving operation manager.

By outputting to the operation management apparatus 300, installation of the roadside apparatus can be automated. The output to the operation manager is notified by a pop-up display on a display used by the operation manager for operation management, an e-mail, or the like. When the roadside apparatus installation plan is output to the operation manager, installation of the roadside apparatus can be semi-automated.

In a case where the output destinations of the travel plan output unit 230 of the travel planning apparatus 200 and the installation plan output unit 420 of the roadside apparatus installation planning apparatus 400 are the operation management apparatus 300, the operation management apparatus 300 can determine whether to adopt or reject the change of the travel plan by the travel planning apparatus 200 and whether to adopt or reject the roadside apparatus installation plan by the roadside apparatus installation planning apparatus 400, and outputs a result of adoption or rejection for the travel planning apparatus 200 and the roadside apparatus installation planning apparatus 400, and a reason for rejection in a case of rejection.

Since the operation management apparatus 300 outputs the reason why the changed travel plan is rejected by the travel planning apparatus 200 to the travel planning apparatus, and outputs the reason why the roadside apparatus installation plan planned by the roadside apparatus installation planning apparatus 400 is rejected by the roadside apparatus installation planning apparatus 400, it is possible to increase the adoption probability of the travel plan and the roadside apparatus installation plan by changing the plan policy so that the changed travel plan and the roadside apparatus installation plan are unlikely to be rejected.

When the roadside apparatus installation plan is rejected, the roadside apparatus installation planning apparatus 400 can change the plan policy so that it is unlikely to be rejected. For example, when the plan is rejected due to high cost, the plan policy can be changed so that a sensor with a low price can be easily selected.

When the roadside apparatus installation plan is adopted, the operation management apparatus 300 manages the installation of a new roadside apparatus based on the roadside apparatus installation plan, but it is also possible to automate all procedures necessary for the installation of the roadside apparatus, and it is also possible to automate only a part of the procedures.

Note that the operation management apparatus 300 can also determine only one of adoption or rejection of the change of the travel plan and adoption or rejection of the roadside apparatus installation plan.

The roadside apparatus installation planning unit 410 can be configured using a computer, and is implemented by the computer executing a program. That is, the roadside apparatus installation planning unit 410 is implemented by, for example, a processing circuit. A processor such as a CPU or a DSP is applied to the processing circuit, and a function of each unit is implemented by executing a program stored in a storage apparatus.

Note that dedicated hardware may be applied to the processing circuit. In a case where the processing circuit is dedicated hardware, the processing circuit corresponds to, for example, a single circuit, a composite circuit, a programmed processor, a parallel programmed processor, ASIC, FPGA, or a combination thereof.

The functions of the roadside apparatus installation planning unit 410 may be implemented by individual processing circuits, or the functions may be collectively implemented by one processing circuit.

### <Operation>

### <Example of Roadside Apparatus Installation Plan>

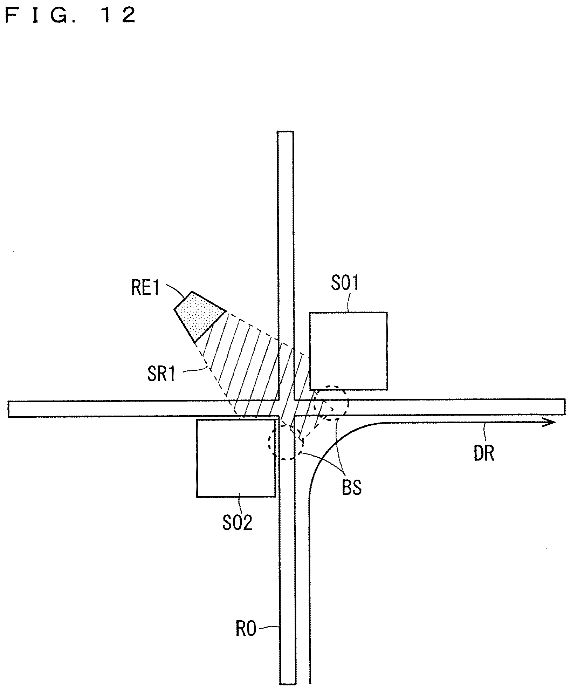

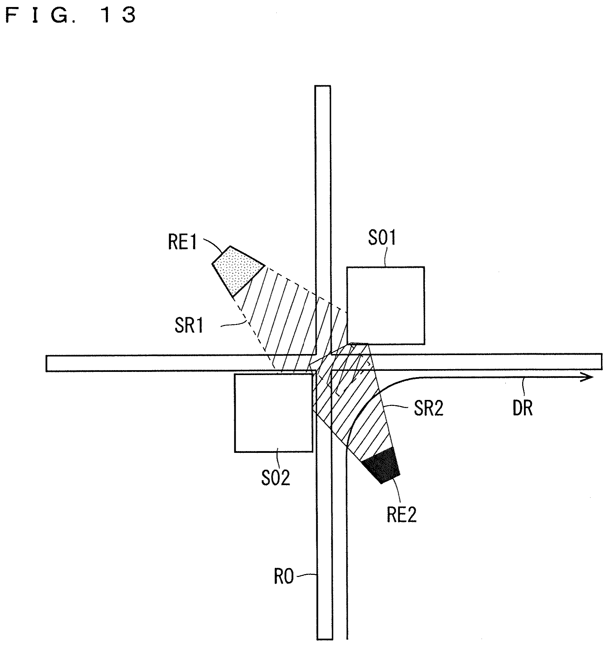

Figs. 12 and 13 are diagrams illustrating an example of a roadside apparatus installation plan by the roadside apparatus installation planning apparatus 400 in the travel planning system 1000A. Fig. 12 is a diagram illustrating the mounting position and mounting posture of the existing roadside apparatus RE1, the estimated detection range SR1, and the travel route DR together, and Fig. 13 is a diagram illustrating the mounting position and mounting posture of the roadside apparatus RE2 to be added, and the estimated detection range SR2 together.

As illustrated in Fig. 12, the roadside apparatus RE1 is installed at a corner of an intersection of roads RO that intersect each other. However, a static target SO1 and a static target SO2 are present next to the intersection so as to face each other, and a blind spot BS is generated in the detection range SR1 of the roadside apparatus RE1.

By creating the roadside apparatus installation plan so as to eliminate the blind spot BS, the roadside apparatus installation planning unit 410 additionally installs the roadside apparatus RE2 at the corner of the intersection opposite to the roadside apparatus RE1 as illustrated in Fig. 13. The blind spot at the intersection is eliminated between the detection range SR1 of the roadside apparatus RE1 and the detection range SR2 of the roadside apparatus RE2. As a result, the safety of the automatic driving is improved.

If the vehicle to be managed by the operation management apparatus 300 is a bus, the travel planning system 1000A is provided as a system of a bus company, and the bus company or a company commissioned by the bus company installs the roadside apparatus based on the roadside apparatus installation plan. In this case, in addition to the bus company creating the roadside apparatus installation plan, the bus company and the taxi company can cooperate to create the roadside apparatus installation plan. In addition, when the vehicle to be managed is a logistics vehicle, the system is provided as a system of a logistics company, and a roadside apparatus installation plan of the logistics company is created based on the roadside apparatus installation plan, but the user of the system is not limited to the above.

Although the present disclosure has been described in detail, the above description is exemplary in all aspects and the present disclosure is not limited thereto. It is understood that numerous modifications not shown can be assumed without departing from the scope of the present disclosure.

Note that, in the present disclosure, each embodiment can be freely combined, and each embodiment can be appropriately modified or omitted within the scope of the disclosure.

## Claims

1. A travel planning apparatus that changes a travel plan of a vehicle, the travel planning apparatus comprising:
a travel plan changing unit that changes the travel plan based on at least one of people flow information that is information on people flow, popular spot information that is information on popular spots, real estate information that is information on real estate, facility-related information that is information on facilities, road information that is information on roads, or roadside apparatus installation information that is information on installed roadside apparatus, in an area where the vehicle travels; and
a travel plan output unit that outputs a changed travel plan,
wherein the people flow information includes information on people flow according to the number of people using a commercial facility or a tourist spot.

2. The travel planning apparatus according to claim 1, wherein
the travel plan includes at least one of a travel route, a stay position, a departure time, an arrival time, or a number of services.

3. The travel planning apparatus according to claim 1 or 2, wherein
the popular spot information includes at least one of:
the number of times a word related to a spot is searched on an Internet;
the number of times the word related to the spot is posted on the Internet; or
word-of-mouth information of the spot.

4. The travel planning apparatus according to claim 1 or 2, wherein
the real estate information includes at least one of real estate selling information, real estate registration information, tenant information, or a tenant recruitment status.

5. The travel planning apparatus according to claim 1 or 2, wherein
the facility-related information includes at least one of construction plan information of the facility, demolition plan information of the facility, maintenance information of the facility, or reconstruction information of the facility.

6. The travel planning apparatus according to claim 1 or 2, wherein the road information includes any one of past congestion information, a travel difficulty level, and a stop installation difficulty level.

7. The travel planning apparatus according to claim 1 or 2, wherein
the roadside apparatus installation information includes a type of the roadside apparatus, an attachment position of the roadside apparatus, and an attachment posture of the roadside apparatus, and
the road information includes information on a three-dimensional shape of a static target on the road.

8. A travel planning system comprising:
the travel planning apparatus according to any one of claims 1 to 7; and
an operation management apparatus that receives the changed travel plan, determines whether to adopt or reject the changed travel plan, and manages operation of the vehicle based on the changed travel plan when the changed travel plan is adopted.

9. The travel planning system according to claim 8, wherein
when the changed travel plan is rejected, the operation management apparatus outputs a reason for the rejection to the travel planning apparatus.

10. A travel planning system comprising:
the travel planning apparatus according to claim 7;
a roadside apparatus installation planning apparatus including: a roadside apparatus installation planning unit that performs a roadside apparatus installation plan based on the road information, the roadside apparatus installation information, and the changed travel plan; and an installation plan output unit that outputs the roadside apparatus installation plan; and
an operation management apparatus that receives the changed travel plan and the roadside apparatus installation plan, determines whether to adopt or reject the changed travel plan and whether to adopt or reject the roadside apparatus installation plan, manages operation of the vehicle based on the changed travel plan when the changed travel plan is adopted, and manages installation of a new roadside apparatus based on the roadside apparatus installation plan when the roadside apparatus installation plan is adopted.

11. The travel planning system according to claim 10, wherein
when the changed travel plan is rejected, the operation management apparatus outputs a reason for the rejection to the travel planning apparatus, and
when the roadside apparatus installation plan is rejected, the operation management apparatus outputs a reason for the rejection to the roadside apparatus installation planning unit.
